# FASCICULE DE BREVET EUROPEEN

(11) **EP 3 696 065 B1**
(45) Date de publication et mention de la délivrance du brevet: **13.10.2021**
(21) Numéro de dépôt: 20157885.3
(22) Date de dépôt: 18.02.2020
(51) Int. Cl.: B62M 3/08

(54) **PÉDALE AUTOMATIQUE RÉGLABLE POUR CYCLES**
REGULIERBARES AUTOMATISCHES PEDAL FÜR FAHRRÄDER
AUTOMATIC ADJUSTABLE PEDAL FOR CYCLES

(30) Priorité: 18.02.2019 FR 1901621
(43) Date de publication de la demande: 19.08.2020
(73) Titulaire: SRAM LLC, County of Kent, Delaware 19904 (US)
(72) Inventeur: MARINIER, Benjamin, 38700 LA TRONCHE (FR); RODIER, Fabien, 38360 NOYAREY (FR)
(74) Mandataire: Alatis

(56) Documents cités:
- EP-A1- 0 826 588
- EP-A1- 1 927 540
- JP-A- H0 710 066
- US-A1- 2004 231 454

## Description

L'invention concerne une pédale automatique de cycles pourvue de moyens de réglage.

Plus particulièrement, l'invention s'intéresse à un dispositif permettant d'assurer le réglage manuel de la raideur des ressorts de rappel associés aux mâchoires de fixation de la chaussure sur une pédale automatique pour cycles.

### ETAT DE LA TECHNIQUE ANTERIEURE

Il existe déjà des pédales de cycles (vélos de route, VTT, ...) dites automatiques qui comprennent des griffes ou des mâchoires, formant des butées avant et arrière de fixation, destinées à bloquer un élément d'accrochage solidaire de la chaussure du cycliste. Cet élément d'accrochage est généralement sous forme d'une cale plate logée, de manière éventuellement amovible, sous la semelle de la chaussure.

Ces pédales comprennent généralement deux mâchoires qui maintiennent la cale de la chaussure et qui sont soient toutes les deux mobiles, soit l'une mobile et l'autre fixe.

Dans certains modes de réalisation, destinés plus particulièrement au VTT, les mâchoires sont montées sur les deux faces de la pédale pour permettre au cycliste de déchausser et de rechausser aisément et plus rapidement sur l'une ou l'autre face de la pédale, ceci indifféremment. Dans d'autres modes de réalisation, en particulier pour les pédales destinées à être utilisées sur les vélos de route, les mâchoires sont généralement montées uniquement sur une seule face de la pédale, pour que la pédale reste légère.

En général, sur une face de la pédale, au moins l'une des mâchoires est montée pivotante pour permettre son basculement d'avant en arrière et le chaussage et déchaussage de la chaussure dans la pédale. Cette mâchoire pivotante est précontrainte par un organe de rappel élastique, tel qu'un ressort hélicoïdal, et bascule sous l'action de la chaussure, en s'écartant de la mâchoire opposée, entre une position d'ouverture et une position de fermeture assurant le verrouillage de l'élément d'accrochage solidaire de la chaussure.

Cette mâchoire peut ainsi être déplacée en force, en contrant l'effort de rappel du ressort, vers sa position d'ouverture pour introduire ou libérer l'élément d'accrochage de la chaussure, lors d'un arrêt volontaire ou en cas de chute.

La tension ou la raideur du ressort de rappel peut être modifiée à l'aide d'un organe de réglage tel qu'une vis pour ajuster l'effort nécessaire permettant le dégagement de la chaussure. En effet, il s'avère utile de modifier la raideur du ressort ou la tension du ressort pour adapter la pédale au poids du cycliste ainsi qu'à son niveau d'expérience ou au type de parcours (terrain vallonné ou montagne à forte pente...), de façon à permettre un chaussage et un déchaussage aisés et rapides tout en évitant les déchaussages intempestifs.

De telles pédales automatiques sont décrites, notamment, dans le brevet US 8312791 où la mâchoire fixe est montée à l'avant et le réglage de la tension du ressort de rappel s'effectue directement sur la mâchoire mobile qui est ici montée à l'arrière.

Le brevet US6012356 décrit une autre pédale automatique où les deux mâchoires avant et arrière sont mobiles et le réglage de la tension du ressort s'effectue alors au travers de l'une de ces mâchoires mobiles.

Le brevet EP 1022213 décrit une pédale automatique avec un système de réglage de la tension du ressort comprenant un excentrique accessible depuis le côté latéral de la pédale. Le brevet JPH0710066A montre le préambule de la revendication 1.

Ainsi, dans l'art antérieur, les moyens de réglage de la raideur du ressort agissent toujours sur les branches du ressort qui sont directement sollicitées par la mâchoire mobile et ces moyens de réglage sont donc soumis au même pivotement que la mâchoire mobile lors du chaussage et du déchaussage.

Ainsi, dans ces modes de réalisation, l'organe de réglage s'écarte de la normale à la branche du ressort lors de l'ouverture de la mâchoire mobile, l'effort d'ouverture n'étant plus linéairement proportionnel au déplacement de la mâchoire mobile. Dans ces conditions, le réglage initial peut ne pas être conservé.

De plus, la configuration antérieure conduit à une usure prématurée du ressort ou tout au moins à un relâchement progressif de sa tension ou une diminution de sa raideur du fait de la déformation rémanente dans le temps des branches en contact avec les moyens de réglage.

Or, la fatigue du ressort consécutive à cette déformation nécessite d'effectuer des réglages fréquents et laborieux et entraîne, à défaut, des ouvertures non maîtrisés des mâchoires et, par suite, des risques de déséquilibre du cycliste voire de chutes.

### PRESENTATION DE L'INVENTION

La présente invention a pour but de résoudre les problèmes techniques posés par l'art antérieur en proposant de modifier la position de montage des moyens de réglage du ressort, en vue de conserver le réglage initial souhaité de la tension du ressort et de préserver les capacités de rappel élastique de ce ressort.

Ce but est atteint selon l'invention au moyen d'une pédale automatique pour cycles comprenant un corps présentant une face supérieure et une face inférieure séparées par un plan longitudinal et portant chacune une mâchoire mobile et une mâchoire fixe, les mâchoires fixes étant montées en vis-à-vis des mâchoires mobiles et les deux mâchoires fixes et mobiles délimitant entre elles un logement pour une cale solidaire de la semelle d'une chaussure, ladite mâchoire mobile étant sollicitée par au moins un ressort de rappel élastique de façon à pivoter entre une position de verrouillage de ladite cale et une position d'ouverture permettant l'introduction et la libération de ladite cale, ledit ressort présentant, d'une part, au moins une branche mobile sollicitée par la mâchoire mobile et une branche fixe non sollicitée par la mâchoire mobile et étant pourvu, d'autre part, d'un organe de réglage de sa raideur, caractérisée en ce que ledit organe de réglage de la raideur du ressort est monté sur la face de la pédale opposée à ladite mâchoire mobile par rapport audit plan longitudinal, au travers de la mâchoire fixe, et agit sur la branche fixe dudit ressort.

Selon une caractéristique avantageuse, la mâchoire mobile pivote autour d'un axe transversal qui constitue l'axe de montage du ressort de rappel élastique et l'axe principal de l'organe de réglage est orienté perpendiculairement par rapport audit axe de montage du ressort.

Selon une autre caractéristique, l'axe principal de l'organe de réglage présente une inclinaison par rapport à la perpendiculaire au plan longitudinal du corps.

Selon encore une autre caractéristique, l'organe de réglage est monté au travers du corps de la pédale.

Selon une variante de réalisation spécifique, l'organe de réglage est constitué d'une tige filetée associée à un écrou logé entre la mâchoire fixe et le ressort, l'écrou prenant appui sur la branche fixe du ressort.

Dans cette variante, l'organe de réglage comprend, de préférence, des moyens de montage sur le corps ou sur la mâchoire fixe tels que la tige soit mobile en rotation et l'écrou soit mobile en translation le long de la tige filetée.

A cet effet, l'écrou comprend des moyens de blocage en rotation par rapport au corps ou à la mâchoire fixe de la pédale.

Avantageusement, l'écrou comprend une bague centrale prolongée par deux ailettes latérales anti-rotation venant en butée contre ladite mâchoire fixe.

Selon une variante spécifique, la tige filetée possède une tête affleurant la face supérieure de la mâchoire fixe et surmontant une collerette élargie disposée entre l'écrou et la face inférieure de ladite mâchoire fixe.

Selon un mode de réalisation particulier de l'invention, le ressort est hélicoïdal et comprend au moins une branche d'extrémité mobile prenant appui sur la mâchoire mobile.

De préférence, ce ressort hélicoïdal est formé de deux portions de spires séparées par une branche centrale sous forme d'une boucle faisant saillie sous la mâchoire fixe.

Cette branche centrale constitue alors la branche fixe du ressort sur laquelle s'appuie l'organe de réglage.

Selon une caractéristique de l'invention, la mâchoire mobile est constituée d'un arceau mobile et les branches d'extrémité mobiles du ressort font saillie contre les branches latérales de cet arceau mobile.

Selon une variante de réalisation particulière, le ressort hélicoïdal est formé de deux portions de spires séparées par une branche centrale qui est sous forme d'une boucle faisant saillie sous la mâchoire fixe.

Selon une variante de réalisation spécifique, la mâchoire fixe comprend une patte en saillie au travers de laquelle passe l'organe de réglage.

Selon un mode de réalisation préférentiel, la mâchoire mobile est placée à l'avant de la pédale sur la face supérieure du corps, tandis que la mâchoire fixe est placée à l'arrière sur cette même face.

Selon un mode de réalisation alternatif, la mâchoire mobile est placée à l'arrière de la pédale sur la face supérieure du corps, tandis que la mâchoire fixe est placée à l'avant sur cette même face.

Avec la pédale automatique de l'invention, la patte centrale du ressort sur laquelle l'organe de réglage de sa raideur est en appui et les branches d'extrémité de ce ressort qui travaillent lors du pivotement vers l'avant de la mâchoire mobile, sont distinctes et éloignées les unes des autres ce qui permet d'obtenir une meilleure répartition des efforts.

Par suite, le réglage de la dureté peut s'effectuer sur une plage élargie et le résultat est alors plus linéaire. En outre, la position du ressort est inversée par rapport aux modes de réalisation antérieurs et la durée de vie du ressort s'en trouve allongée.

En outre, l'organe de réglage de la dureté de la dureté n'est jamais en mouvement ce qui assure une meilleure stabilité du réglage dans le temps.

L'invention s'applique aussi bien à des pédales automatiques pour lesquelles, sur au moins une face de la pédale, l'une des mâchoires est mobile et l'autre est fixe, qu'à des pédales automatiques pour lesquelles les deux mâchoires sont mobiles.

D'autres caractéristiques et avantages de l'invention ressortiront à la lecture de la description qui va suivre, en référence aux figures annexées et détaillées ci-après.

### BREVE DESCRIPTION DES FIGURES

[Fig. 1] est une vue en perspective d'un premier mode de réalisation de la pédale automatique de l'invention.
[Fig. 2] est une vue en perspective éclatée de la pédale automatique de la figure 1.
[Fig. 3] est une vue en coupe longitudinale de la pédale automatique des figures 1 et 2.
[Fig. 4] est une vue en coupe longitudinale d'un second mode de réalisation de la pédale automatique de l'invention.

Pour plus de clarté, les éléments identiques ou similaires sont repérés par des signes de référence identiques sur l'ensemble des figures.

### DESCRIPTION DETAILLEE DE L'INVENTION

Naturellement, les modes de mise en œuvre du procédé de l'invention illustrés par les figures présentées ci-dessus et décrites ci-après, ne sont donnés qu'à titre d'exemples non limitatifs. Il est explicitement prévu que l'on puisse proposer et combiner entre eux différents modes pour en proposer d'autres.

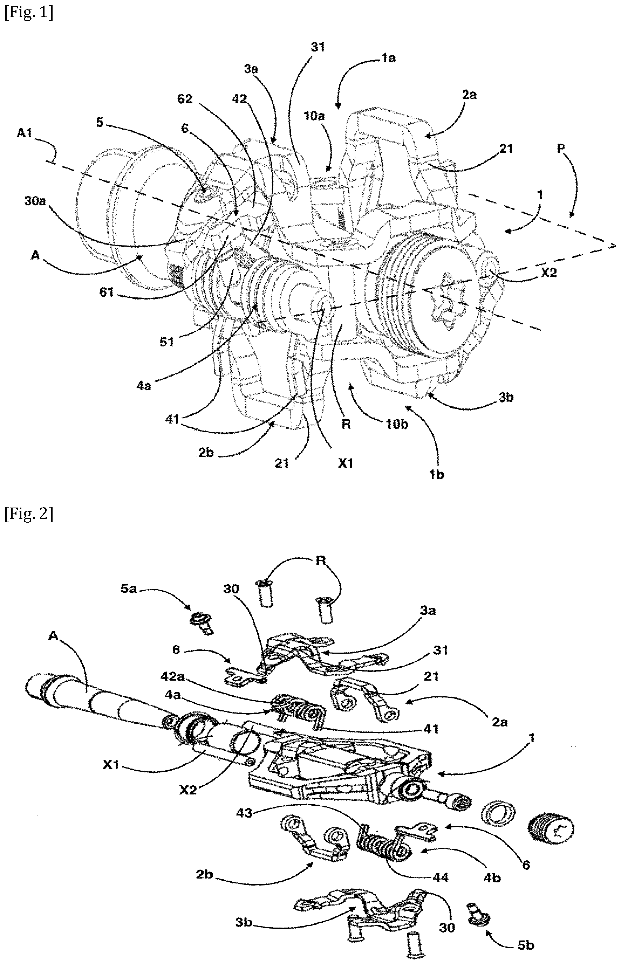

De manière générale, l'invention concerne une pédale dite automatique ou une pédale semi-automatique pour cycles (vélo de route, de cyclotourisme, de course, VTT, ...) dont des modes de réalisation sont représentés sur les figures 1 à 4.

De manière connue en soi, une pédale automatique est destinée à coopérer avec une cale d'accrochage (non représentée sur les figures) solidaire de la semelle d'une chaussure (non représentée). Les profils et géométries respectifs de la cale et de la pédale sont choisis de façon complémentaire et adaptée et ne font pas l'objet de la présente invention.

Plus précisément, une telle pédale automatique comprend un corps 1 portant, sur au moins l'une de ses deux faces 1a, 1b, d'une part, un organe de fixation de la cale, situé à l'avant du corps et réalisé ici sous forme d'une mâchoire mobile 2a, 2b et, d'autre part, un organe de fixation arrière sous forme d'une mâchoire fixe 3a, 3b, ces deux organes de fixation délimitant entre eux des logements 10, (respectivement 10a, 10b) pour la cale d'accrochage.

Toutefois, on ne sortira pas du cadre de l'invention si les deux mâchoires fixe et mobile sont inversées sur la face de chaussage de la pédale, c'est-à-dire lorsque la mâchoire mobile est située à l'arrière du corps de la pédale et la mâchoire fixe est située à l'avant de la pédale.

Le corps 1 de la pédale est pourvu d'un alésage central recevant un arbre A. L'extrémité libre de cet arbre A s'étend en saillie à l'extérieur du corps 1 et comprend un filetage pour le montage de la pédale automatique sur la manivelle du pédalier du cycle. Le corps 1 de la pédale est donc monté en libre rotation sur l'arbre A, autour de l'axe de rotation A1 (figure 1). Ainsi la pédale est composée du corps 1 et de l'arbre A.

Le corps de la pédale pouvant tourner librement autour de l'axe de rotation A1, on conviendra de nommer « face supérieure », la face positionnée vers le haut pour permettre le chaussage, et la face opposée de la pédale ne pouvant alors pas être chaussée sera nommée « face inférieure » de la pédale.

Les faces inférieure et supérieure de la pédale sont situées de part et d'autre du plan longitudinal P du corps 1 passant par l'axe de rotation A1 et sont des faces opposées l'une à l'autre. De même on parlera d'avant de la pédale pour la partie de la pédale tournée en direction de l'avant du vélo, lorsque la pédale est montée sur le vélo et d'arrière de la pédale pour la partie de la pédale tournée vers l'arrière du vélo. Le côté intérieur de la pédale sera constitué de la partie de la pédale située du côté du cadre du vélo, tandis que l'autre côté sera le côté extérieur de la pédale. Par ailleurs, on entendra par transversale, une direction parallèle à l'axe de rotation A1 du corps 1 de la pédale et longitudinale, une direction parallèle au plan du cadre du vélo.

Dans le mode de réalisation représenté sur les figures, la pédale automatique de l'invention est réversible, c'est-à-dire que les deux faces 1a, 1b du corps 1 de la pédale sont équipées chacune de deux mâchoires, l'une mobile 2a, 2b et l'autre fixe 3a, 3b. A cet effet, les mâchoires fixes 3a, 3b sont montées, l'une (3a) à l'arrière de la pédale sur sa face supérieure 1a, et l'autre (3b) à l'avant de la pédale sur sa face inférieure 1b, comme illustré par les figures.

En vis-à-vis de chacune de ces mâchoires fixes 3a, 3b sont montées des mâchoires mobiles 2a, 2b sur les faces opposées de la pédale par rapport au plan P. Dans ces conditions, quelle que soit la face de la pédale située sur le dessus, la mâchoire mobile qui est sur la face supérieure de la pédale est toujours disposée à l'avant, et la mâchoire fixe qui est également sur la face supérieure de la pédale est toujours située à l'arrière, ceci pour permettre le chaussage de la cale située sous la semelle de la chaussure.

Plus précisément, dans les modes de réalisation illustrés par les figures 1 à 4, la mâchoire mobile 2a est située sur la face supérieure la de la pédale et sur la même face que la mâchoire fixe 3a. Sur les figures 1 à 3, cette mâchoire mobile 2a est située à l'avant de la pédale et en vis-à-vis de la mâchoire fixe 3b située sur la face opposée de la pédale, de l'autre côté du plan longitudinal P, cette face opposée formant la face inférieure 1b de la pédale.

La mâchoire mobile 2b est, quant à elle, située sur la même face que la mâchoire fixe 3b, c'est à dire sur la face inférieure 1b de la pédale qui n'est pas prête au chaussage. Cette mâchoire mobile 2b est positionnée en vis-à-vis de la mâchoire fixe 3a située sur la face opposée de la pédale par rapport au plan longitudinal P, cette face opposée formant la face supérieure la de la pédale.

Ainsi, le cycliste n'a pas à se préoccuper de la position de la pédale autour de l'axe A pour chausser. Ce type de pédale s'adresse plutôt au VTT, car le vététiste peut être amené à déchausser localement sur le parcours et à rechausser rapidement.

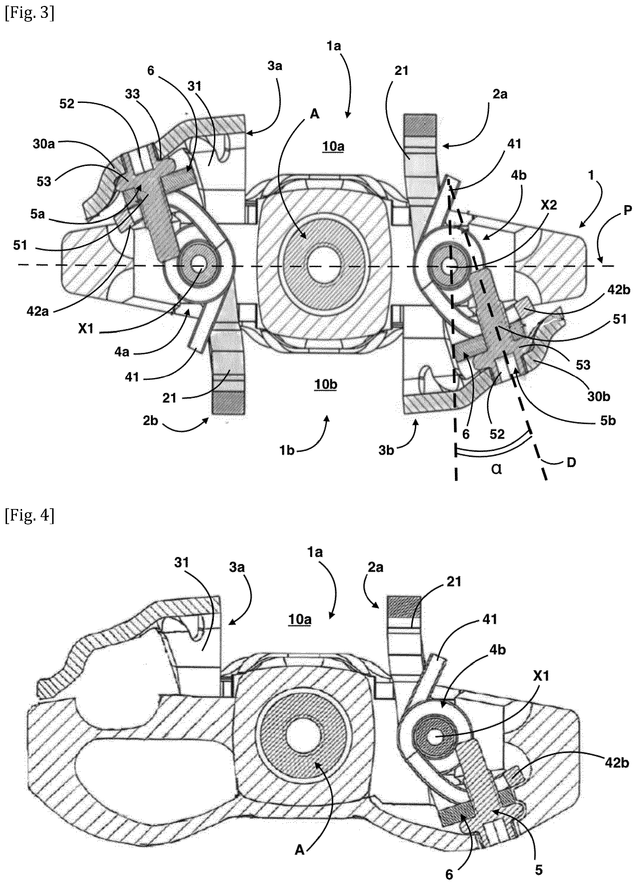

Toutefois, l'invention décrite ci-après peut s'appliquer à une pédale automatique asymétrique dite aussi semi-automatique, telle que celle illustrée par la figure 4. Dans ce cas, seule une face de la pédale peut être chaussée en automatique en étant équipée d'une mâchoire mobile et d'une mâchoire fixe. Cette face est alors positionnée en face supérieure, vers le haut pour permettre le chaussage, par rotation adéquate autour de l'axe de rotation A1 de la pédale.

En outre, l'invention s'applique aussi bien à des pédales automatiques pour lesquelles, sur au moins une face de la pédale, l'une des mâchoires est mobile et l'autre est fixe, qu'à des pédales automatiques pour lesquelles les deux mâchoires sont mobiles.

Les deux mâchoires mobiles 2a, 2b sont identiques tout comme les deux mâchoires fixes 3a, 3b et sont formées ici d'arceaux, respectivement, 21, 31. Les arceaux 31 des mâchoires fixes 3a, 3b sont fixés sur le corps 1 de la pédale au moyen de rivets R (figures 1 et 2) ou de vis.

Sur la face supérieure la de la pédale, telle qu'illustrée sur les figures 1 et 3, la mâchoire mobile 2a est susceptible de pivoter d'arrière en avant autour d'un axe transversal X2 entre une position arrière de fermeture et une position avant d'écartement et d'ouverture.

La position de fermeture arrière correspond au verrouillage de la cale dans le logement 10a et à la solidarisation de la chaussure avec la pédale, cette position de fermeture étant, dans ce cas, une position stable.

Par ailleurs, la position d'écartement vers l'avant correspond à l'ouverture du logement 10a de la cale et permet, soit son introduction dans le logement (chaussage), soit sa libération et son retrait (déchaussage). Cette position d'écartement et d'ouverture est dans ce cas une position instable.

Plus précisément, les mâchoires mobiles 2a, 2b en forme d'arceaux 21 sont montées mobiles chacune autour d'axes transversaux X1, X2 distincts montés dans le corps 1 de la pédale, respectivement, à l'avant et à l'arrière de l'axe de rotation A1 de la pédale et parallèlement à cet axe A1 de rotation.

Dans une variante non représentée, la position d'écartement et d'ouverture pourrait être également une position stable par le maintien en position ouverte de la mâchoire mobile au moyen d'un organe de retenue de type cliquet, connu de l'art antérieur, qui est escamoté lors du chaussage.

Pour permettre le chaussage, le maintien et le déchaussage de la cale de la chaussure, la mâchoire mobile 2a, 2b est sollicitée vers la position arrière de fermeture par au moins un ressort de rappel élastique 4a, 4b, ici sous forme d'un ressort hélicoïdal. Le pivotement de la mâchoire mobile 2a, 2b est obtenu par appui de la chaussure vers l'avant lors du chaussage, via la cale d'accrochage qui présente au moins une portion en saillie susceptible de venir en butée contre l'arceau 21 formant respectivement la mâchoire mobile 2a, 2b.

Les ressorts de rappel 4a, 4b des mâchoires mobiles 2a, 2b sont montés, respectivement, autour des axes transversaux X2, X1, nommés axes de montage des ressorts. Ces ressorts de rappel 4a, 4b comprennent une branche fixe 42 (figure 1), 42a, 42b (figures 2 et 3) en forme de boucle fermée située ici dans la partie centrale du ressort, ainsi que, de part et d'autre de cette branche fixe, deux portions de spires 43, 44 (figure 2) terminées par deux branches mobiles d'extrémité 41.

Ces branches d'extrémité 41 s'étendent au-delà des axes transversaux X1, X2 en direction de l'arceau mobile 21, et sont destinées à prendre appui sur l'une des mâchoires mobiles 2a, 2b. Plus précisément, les branches d'extrémité 41 prennent appui sur une partie de l'arceau 21 en faisant saillie à l'avant et, de préférence, sur les branches latérales de l'arceau 21, comme illustré par les figures 1 et 3.

Ces branches d'extrémité 41 sont donc mobiles en basculement sous l'action des arceaux 21, par rapport au corps 1 de la pédale. Ainsi, l'arceau 21 sollicite le ressort de rappel 4b, (respectivement 4a). Au contraire, la branche fixe centrale 42a, 42b n'est pas mobile en basculement par rapport au corps 1 de la pédale et ne sollicite donc pas les ressorts de rappel 4a, 4b.

Ainsi, on entendra par « branche fixe » du ressort, la branche qui n'est pas sollicitée lors du mouvement de la mâchoire mobile. La position et l'orientation de cette branche peuvent être cependant modifiées par un organe de réglage lors de l'ajustement par le cycliste de la raideur du ressort, alors que la mâchoire mobile n'est pas en fonctionnement.

Cette branche fixe centrale 42a (42b) s'étend du côté opposé à la branche mobile d'extrémité 41 par rapport à l'axe transversal X1 (X2) en direction de la mâchoire fixe 3a (3b) qui est montée en vis-à-vis de la mâchoire mobile 2b (respectivement 2a) de l'autre côté du plan P, comme illustré par la figure 3. En particulier, la branche fixe centrale 42a, 42b s'étend sous une patte 30 (figure 2), ou 30a, 30b (figures 1 et 3) de la mâchoire fixe qui fait saillie à partir de l'arceau 31. Cette patte ne participe pas à l'accrochage de la cale de la chaussure et s'étend en dehors du logement 10 destiné à recevoir la cale de la chaussure.

Selon une variante non représentée, les moyens de rappel élastique de chaque mâchoire mobile comprennent deux ressorts hélicoïdaux indépendants montés bout à bout et en série sur chacun des axes X1, X2 de montage des ressorts. Dans ce cas, la branche fixe centrale (en forme de boucle dans les modes de réalisation illustrés), est remplacée par deux branches indépendantes parallèles et côte à côte, appartenant à chacun des deux ressorts hélicoïdaux juxtaposés et alignés. Chacun des ressorts est avantageusement pourvu d'un organe de réglage 5 de sa raideur.

Selon l'invention et de manière générale, les organes de réglage 5 de la raideur des ressorts 4a, 4b sont montés sur des éléments solidaires du corps 1 de la pédale, situés du côté opposé à la mâchoire mobile 2a ou 2b, c'est-à-dire de l'autre côté du plan P par rapport à la mâchoire mobile 2a ou 2b. Ces éléments solidaires du corps sont, par exemple, des parties intrinsèques du corps 1 de la pédale, ou bien des éléments rapportés tel que les mâchoires fixes 3a, 3b du mode de réalisation représenté sur les figures 1 à 3. Dans un autre mode de réalisation de l'invention, les mâchoires fixes pourraient être réalisées d'une seule pièce avec tout ou partie du corps de la pédale.

Chaque organe de réglage 5 est destiné à agir en compression sur la branche 42 du ressort correspondant qui reste fixe par rapport au corps 1 de la pédale et qui n'est donc pas sollicitée par la mâchoire mobile lors de son pivotement, notamment, lors du chaussage et du déchaussage de la chaussure. L'intervention du cycliste sur chaque organe de réglage permet de déplacer verticalement la branche fixe correspondante des ressorts en modifiant ainsi la raideur de ces ressorts.

Dans le mode de réalisation illustré par les dessins, les organes de réglage 5 (figures 1 et 4), 5a, 5b (figures 2 et 3) sont montés au travers des mâchoires fixes 3a ou 3b. Ainsi, chaque organe de réglage agit sur le ressort de rappel de la mâchoire mobile qui est située sur la face opposée de la pédale par rapport à la face de la pédale qui reçoit cet organe de réglage.

Autrement dit, l'organe de réglage 5a (côté gauche de la figure 3) est monté au travers de la mâchoire fixe 3a et vient agir sur la branche fixe centrale 42a du ressort de rappel 4b qui agit sur la mâchoire mobile 2b. Cette mâchoire mobile 2b est située en vis-à-vis de la mâchoire fixe 3a, sur la face opposée de la pédale, de l'autre côté du plan P, par rapport à la face sur laquelle est montée la mâchoire fixe 3a.

De façon similaire, l'organe de réglage 5b (côté droit de la figure 3) est monté au travers de la mâchoire fixe 3b et vient agir sur la branche centrale 42b du ressort de rappel 4a qui agit sur la mâchoire mobile 2a. Cette mâchoire mobile 2a est située en vis-à-vis de la mâchoire fixe 3b sur la face opposée de la pédale, de l'autre côté du plan P, par rapport à la face sur laquelle est montée la mâchoire fixe 3b.

Chacun des organes de réglage 5 est constitué d'un système vis-écrou comprenant une tige filetée 51 surmontée d'une tête 52 affleurant la face extérieure de la mâchoire fixe. L'axe principal D de la tige 51 est positionné perpendiculairement à l'axe de montage X1 ou X2 du ressort de rappel 4a, 4b correspondant. Plus précisément, l'axe principal D présente une inclinaison α (figure 3), par rapport à la perpendiculaire au plan longitudinal P du corps 1, comprise entre 0 et 30° (en valeur absolue), et de préférence, comprise entre 0 et 20° (en valeur absolue). En outre, l'axe D de la tige 51 de l'organe de réglage est aussi perpendiculaire à la branche centrale fixe 42 du ressort 4a, 4b.

La tige filetée 51 est associée ici à un écrou 6 logé entre la mâchoire fixe 3a ou 3b et le ressort en vis-à-vis, respectivement 4b ou 4a. L'écrou 6 prend appui sur la branche fixe centrale 42 du ressort, comme illustré par la figure 1. La tige 51 est mobile en rotation par rapport au corps 1 de la pédale mais est fixe en translation par rapport à ce corps et, en particulier, par rapport à la mâchoire fixe sur laquelle elle est montée.

Aussi, la rotation de la tige 51 entraine la translation de l'écrou 6 le long de cette tige. Cet écrou 6 appuie alors sur la branche fixe 42 du ressort en la déplaçant vers le bas pour comprimer le ressort et modifier ainsi sa raideur.

Dans ce contexte, il est toutefois nécessaire de bloquer l'écrou 6 en rotation par rapport au corps de la pédale ou par rapport à la mâchoire fixe par des moyens de blocage en rotation.

A cet effet, l'écrou 6 comprend une bague centrale 61 prolongée par deux ailettes latérales 62 anti-rotation venant en butée contre l'arceau 31 formant la mâchoire fixe 3a, 3b, comme illustré par la figure 1.

La tige filetée 51 porte une collerette élargie 53 disposée entre l'écrou 6 et la face inférieure de la mâchoire fixe, le ressort de rappel plaquant cette collerette sous la face inférieure de la patte 30a, 30b de la mâchoire fixe. La patte 30a, 30b est, à cet effet, pourvue d'une cavité inférieure de calage 33 recevant la collerette 53, comme illustré par la figure 3.

Comme illustré par la figure 3, la tête 52 est creuse et présente une cavité profilée de façon à pouvoir tourner la tige 51 au moyen d'un outil adapté (par exemple, un tournevis ou une clé). Lorsque l'on engage l'outil dans la tête 52 (par exemple, dans une rainure ménagée dans le fond de la cavité) et que l'on effectue une rotation, la tige filetée 51 tourne et l'écrou 6 se translate le long de la tige filetée 51 au travers de la bague 61 de l'écrou 6. La bague 61 se trouve alors en appui forcé contre la branche fixe centrale du ressort tout en restant bloquée en rotation grâce aux ailettes 62.

Ce déplacement de l'écrou 6 permet d'augmenter ou de relâcher la tension du ressort (selon le sens de rotation de la tige 51) et d'ajuster la raideur de ce ressort. Ce réglage est continu, très précis et présente une plage de réglage suffisante pour adapter la raideur du ressort de rappel à des cyclistes de poids et de niveaux très divers.

Le réglage de la raideur des ressorts des mâchoires mobiles 2a, 2b est effectué du côté extérieur des mâchoires fixes 3a, 3b en vis-à-vis de la mâchoire mobile correspondante située de l'autre côté du plan P. L'utilisateur peut choisir d'effectuer le réglage de la raideur en positionnant la partie supérieure de l'organe de réglage vers le haut ou vers le bas, en tournant la pédale de façon adéquate autour de son axe A1.

En effet, positionner le réglage en face supérieure de la pédale offre une meilleure visibilité à l'utilisateur. Dans le cas du mode de réalisation illustré, deux réglages sont nécessaires pour régler la raideur de chacun des deux ressorts 4a, 4b agissant sur les deux mâchoires mobiles 2a, 2b qui équipent respectivement chacune des faces la, 1b de la pédale.

Dans le second mode de réalisation représenté sur la figure 4, la pédale est semi-automatique, c'est-à-dire qu'une seule face (ici 1a) de la pédale est équipée de mâchoires, l'une des mâchoires étant fixe (3a) et l'autre mobile (2a). L'autre face de la pédale est plane ou présente des formes adaptées pour que le cycliste puisse poser librement sa chaussure sur cette face, sans accrochage mécanique d'une des parties de la chaussure sur la pédale.

Le cas échéant, cette autre face n'est même pas destinée à recevoir la face inférieure de la chaussure. Sur ce type de pédale, l'organe de réglage 5 est monté au travers du corps 1 de la pédale, du côté de la face opposée à la mâchoire mobile 2a, c'est-à-dire du côté de la face de la pédale non équipée de mâchoires. Dans ce cas, la pédale sera munie d'un seul organe de réglage 5 de la raideur de ce seul ressort de rappel 4a qui sollicite l'unique mâchoire mobile 2a et l'utilisateur interviendra uniquement sur ce seul organe de réglage. Ce second mode de réalisation est particulièrement bien adapté à la réalisation d'une mâchoire fixe en une seule pièce avec le corps de la pédale.

Dans une autre variante non représentée, l'arceau de la mâchoire mobile peut être sollicité par un simple ressort de rappel hélicoïdal composé d'une seule hélice ayant deux branches d'extrémité. Une des branches d'extrémité du ressort est en appui contre la mâchoire mobile et est sollicitée par la rotation de la mâchoire mobile, tandis que l'autre branche d'extrémité est immobilisée et correspond à la branche fixe par rapport au corps de la pédale. Cette branche fixe est au contact de l'organe de réglage ou plus précisément de l'écrou de l'organe de réglage pour permettre d'ajuster la raideur du ressort. Dans ce cas, l'organe de réglage n'est plus positionné de façon centrale sur la mâchoire fixe, mais est décalé soit vers le côté extérieur du corps de la pédale, soit vers le côté intérieur du corps.

On ne sortira pas du cadre de l'invention si le ou les ressorts de rappel sont montés autour d'un axe qui n'est pas l'axe de rotation de la mâchoire mobile, mais autour d'un axe distinct et parallèle à l'axe de rotation de la mâchoire mobile.

Ainsi, l'invention s'applique à toute pédale qui a, sur une de ses faces, une mâchoire mobile sollicitée par au moins un ressort de rappel hélicoïdal comportant au moins deux branches, une branche mobile sur laquelle s'appuie la mâchoire mobile et une autre branche fixe, non sollicitée par la mâchoire mobile, sur laquelle s'appuie un organe de réglage de la raideur de ce ressort. L'organe de réglage est mobile en translation par rapport au corps de pédale et est monté au travers du corps de pédale à proximité de la mâchoire fixe et, de préférence, au travers de la mâchoire fixe qui est, dans ce cas, en vis-à-vis de la mâchoire mobile pour laquelle on règle la raideur, sur la face opposée de la pédale. Selon une variante de réalisation, l'organe de réglage 5 passe au travers de la patte 30 (figure 2 ou 30a, 30b figure 3) qui forme une excroissance de la mâchoire fixe. Dans la variante de la figure 3, cette patte (30a, 30b) s'étend de façon légèrement inclinée vers le bas.

Par ailleurs, il est possible d'indiquer la valeur du réglage de la raideur du ressort sur une graduation qui pourrait être par exemple gravée ou imprimée autour de la tête de la vis de réglage, en particulier, sur la face supérieure de la mâchoire fixe. En particulier, l'utilisateur pourrait alors s'assurer du réglage de la raideur des ressorts de rappel de façon similaire pour les deux mâchoires mobiles. Au contraire, l'utilisateur pourrait choisir de régler de façon différente la raideur des ressorts de rappel des deux mâchoires mobiles, pour un usage différent des deux faces de la pédale. Par suite, la pédale de l'invention apporte les avantages mentionnés ci-après.

L'organe de réglage de type vis-écrou permet un réglage multi-positions très progressif, précis et fiable.

L'organe de réglage de la raideur du ressort n'est pas entrainé en rotation lors de la rotation de la mâchoire mobile ce qui évite les déréglages de la valeur de la raideur choisie et permet d'avoir une courbe linéaire de l'effort d'ouverture de la mâchoire en fonction du déplacement de celle-ci.

L'organe de réglage agit sur une branche du ressort différente de la branche sollicitée par ailleurs par la mâchoire mobile ce qui permet de mieux répartir les efforts sur les deux branches du ressort et d'augmenter la durée de vie de la pédale.

## Revendications

1. Pédale automatique pour cycles comprenant un corps (1) présentant une face supérieure (1a) et une face inférieure (1b) séparées par un plan longitudinal (P) et portant chacune une mâchoire mobile (2a, 2b) et une mâchoire fixe (3a, 3b), les mâchoires fixes (3a, 3b) étant montées en vis-à-vis des mâchoires mobiles (2a, 2b) et les deux mâchoires fixes et mobiles délimitant entre elles un logement (10a, 10b) pour une cale solidaire de la semelle d'une chaussure, ladite mâchoire mobile (2a, 2b) étant sollicitée par au moins un ressort (4a, 4b) de rappel élastique de façon à pivoter entre une position de verrouillage de ladite cale et une position d'ouverture permettant l'introduction et la libération de ladite cale, ledit ressort présentant, d'une part, au moins une branche mobile (41) sollicitée par la mâchoire mobile (2a, 2b) et une branche fixe (42) non sollicitée par la mâchoire mobile et étant pourvu, d'autre part, d'un organe de réglage (5, 5a, 5b) de sa raideur, **caractérisée en ce que** ledit organe de réglage (5) de la raideur du ressort est monté sur la face de la pédale opposée à ladite mâchoire mobile (2a, 2b) par rapport au plan longitudinal (P), au travers de la mâchoire fixe (3a, 3b), et agit sur la branche fixe (42, 42a, 42b) dudit ressort.

2. Pédale automatique selon la revendication 1, **caractérisée en ce que** la mâchoire mobile (2a, 2b) pivote autour d'un axe transversal (X2, X1) qui constitue l'axe de montage du ressort (4a, 4b) de rappel élastique et l'axe principal (D) de l'organe de réglage (5, 5a, 5b) est orienté perpendiculairement audit axe (X2, X1).

3. Pédale automatique selon la revendication précédente, **caractérisée en ce que** l'axe principal (D) de l'organe de réglage (5, 5a, 5b) présente une inclinaison (α) par rapport à la perpendiculaire au plan longitudinal (P) du corps (1).

4. Pédale automatique selon l'une des revendications précédentes, **caractérisée en ce que** ledit organe de réglage (5, 5a, 5b) est monté au travers du corps (1) de la pédale.

5. Pédale automatique selon l'une des revendications précédentes, **caractérisée en ce que** ledit organe de réglage (5, 5a, 5b) est constitué d'une tige filetée (51) associée à un écrou (6), l'écrou prenant appui sur la branche fixe (42) du ressort.

6. Pédale automatique selon la revendication précédente, **caractérisée en ce que** l'écrou (6) est logé entre la mâchoire fixe (3a, 3b) et le ressort (4a, 4b).

7. Pédale automatique selon la revendication précédente, **caractérisée en ce que** ledit organe de réglage (5, 5a, 5b) comprend des moyens de montage sur le corps (1) ou sur la mâchoire fixe (3a, 3b) tels que la tige filetée (51) soit mobile en rotation et l'écrou (6) soit mobile en translation le long de ladite tige (51).

8. Pédale automatique selon la revendication précédente, **caractérisée en ce que** ledit écrou (6) comprend des moyens de blocage en rotation par rapport au corps (1) ou à la mâchoire fixe (3a, 3b) de la pédale.

9. Pédale automatique selon l'une des revendications 5 à 8, **caractérisée en ce que** ledit écrou (6) comprend une bague centrale (61) prolongée par deux ailettes latérales (62) anti-rotation venant en butée contre ladite mâchoire fixe (3a, 3b).

10. Pédale automatique selon l'une des revendications 5 à 9, **caractérisée en ce que** ladite tige filetée (51) possède une tête (52) affleurant la face supérieure de la mâchoire fixe (3a, 3b) et surmontant une collerette élargie (53) disposée entre l'écrou (6) et la face inférieure de ladite mâchoire fixe (3a, 3b).

11. Pédale automatique selon l'une des revendications précédentes, **caractérisée en ce que** ledit ressort (4a, 4b) est hélicoïdal et comprend au moins une branche mobile (41) d'extrémité prenant appui sur la mâchoire mobile (3a, 3b).

12. Pédale automatique selon la revendication précédente, **caractérisée en ce que** le ressort hélicoïdal (4a, 4b) est formé de deux portions de spires séparées par une branche centrale (42a, 42b) sous forme d'une boucle faisant saillie sous la mâchoire fixe (3a, 3b).

13. Pédale automatique selon la revendication précédente, **caractérisée en ce que** la branche centrale (42a, 42b) constitue la branche fixe (42) du ressort sur laquelle appuie l'organe de réglage (5, 5a, 5b).

14. Pédale automatique selon l'une des revendications précédentes, **caractérisée en ce que** la mâchoire mobile (2a, 2b) est constituée d'un arceau mobile (21).

15. Pédale automatique selon la revendication précédente, **caractérisée en ce que** lesdites branches mobiles (41) d'extrémité du ressort font saillie contre les branches latérales de l'arceau mobile (21a, 21b).

16. Pédale automatique selon l'une des revendications précédentes, **caractérisée en ce que** la mâchoire fixe (3a, 3b) comprend une patte (30a, 30b) en saillie au travers de laquelle passe l'organe de réglage (5).

17. Pédale automatique selon l'une des revendications précédentes, **caractérisée en ce que** la mâchoire mobile (2a, 2b) est placée à l'avant de la pédale sur la face supérieure (1a) du corps (1), tandis que la mâchoire fixe (3a, 3b) est placée à l'arrière sur cette même face.

18. Pédale automatique selon l'une des revendications 1 à 16, **caractérisée en ce que** la mâchoire mobile (2a, 2b) est placée à l'arrière de la pédale sur la face supérieure (1a) du corps (1), tandis que la mâchoire fixe (3a, 3b) est placée à l'avant sur cette même face.

## Patentansprüche

1. Klickpedal für Fahrräder, das einen Körper (1) umfasst, der eine Oberseite (1a) und eine Unterseite (1b) aufweist, die durch eine Längsebene (P) getrennt sind und die jeweils eine bewegliche Backe (2a, 2b) und eine feste Backe (3a, 3b) tragen, wobei die festen Backen (3a, 3b) gegenüber den beweglichen Backen (2a, 2b) angebracht sind und die zwei festen und beweglichen Backen zwischen ihnen eine Aufnahme (10a, 10b) für einen mit der Sohle eines Schuhs fest verbundenen Keil begrenzen, wobei die bewegliche Backe (2a, 2b) durch wenigstens eine elastische Rückstellfeder (4a, 4b) beaufschlagt wird, so dass sie zwischen einer Verriegelungsposition des Keils und einer offenen Position geschwenkt wird, die das Einführen und das Lösen des Keils ermöglicht, wobei die Feder Folgendes aufweist: einerseits wenigstens einen beweglichen Abschnitt (41), der durch die bewegliche Backe (2a, 2b) beaufschlagt wird, und einen festen Abschnitt (42), der nicht durch die bewegliche Backe beaufschlagt wird, andererseits ein Einstellelement (5, 5a, 5b) ihrer Steifigkeit, **dadurch gekennzeichnet, dass** das Einstellelement (5) der Federsteifigkeit auf der bezogen auf die Längsebene (P) der beweglichen Backe (2a, 2b) gegenüberliegenden Seite des Pedals die feste Backe (3a, 3b) überspannend angebracht ist und auf den festen Abschnitt (42, 42a, 42b) der Feder wirkt.

2. Klickpedal nach Anspruch 1, **dadurch gekennzeichnet, dass** die bewegliche Backe (2a, 2b) um eine Querachse (X2, X1) herum schwenkt, die die Anbringungsachse der elastischen Rückstellfeder (4a, 4b) bildet, und die Hauptachse (D) des Einstellelements (5, 5a, 5b) senkrecht zu dieser Achse (X2, X1) ausgerichtet ist.

3. Klickpedal nach dem vorhergehenden Anspruch, **dadurch gekennzeichnet, dass** die Hauptachse (D) des Einstellelements (5, 5a, 5b) eine Neigung (a) bezogen auf die Senkrechte der Längsebene (P) des Körpers (1) aufweist.

4. Klickpedal nach einem der vorhergehenden Ansprüche, **dadurch gekennzeichnet, dass** das Einstellelement (5, 5a, 5b) durch den Körper (1) des Pedals angebracht ist.

5. Klickpedal nach einem der vorhergehenden Ansprüche, **dadurch gekennzeichnet, dass** das Einstellelement (5, 5a, 5b) aus einem Gewindestift (51) besteht, dem eine Mutter (6) zugeordnet ist, wobei die Mutter auf dem festen Abschnitt (42) der Feder aufliegt.

6. Klickpedal nach dem vorhergehenden Anspruch, **dadurch gekennzeichnet, dass** die Mutter (6) zwischen der festen Backe (3a, 3b) und der Feder (4a, 4b) aufgenommen ist.

7. Klickpedal nach dem vorhergehenden Anspruch, **dadurch gekennzeichnet, dass** das Einstellelement (5, 5a, 5b) Anbringungsmittel an dem Körper (1) oder an der festen Backe (3a, 3b) umfasst, wie zum Beispiel der Gewindestift (51), der drehbeweglich ist, und die Mutter (6), die entlang des Stiftes (51) translatorisch beweglich ist.

8. Klickpedal nach dem vorhergehenden Anspruch, **dadurch gekennzeichnet, dass** die Mutter (6) Mittel zum Blockieren der Drehung bezogen auf den Körper (1) oder die feste Backe (3a, 3b) des Pedals umfasst.

9. Klickpedal nach einem der Ansprüche 5 bis 8, **dadurch gekennzeichnet, dass** die Mutter (6) einen zentralen Ring (61) umfasst, der durch zwei seitliche Verdrehsicherungsflügel (62) verlängert wird, die gegen die feste Backe (3a, 3b) zur Anlage kommen.

10. Klickpedal nach einem der Ansprüche 5 bis 9, **dadurch gekennzeichnet, dass** der Gewindestift (51) einen Kopf (52) besitzt, der bündig mit der Oberseite der festen Backe (3a, 3b) ist und einen ausgeweiteten Flansch (53) überragt, der zwischen der Mutter (6) und der Unterseite der festen Backe (3a, 3b) angeordnet ist.

11. Klickpedal nach einem der vorhergehenden Ansprüche, **dadurch gekennzeichnet, dass** die Feder (4a, 4b) schraubenförmig ist und wenigstens einen beweglichen Endabschnitt (41) umfasst, der auf der beweglichen Backe (3a, 3b) aufliegt.

12. Klickpedal nach dem vorhergehenden Anspruch, **dadurch gekennzeichnet, dass** die Schraubenfeder (4a, 4b) aus zwei Windungsteilen ausgebildet ist, die durch einen mittleren Abschnitt (42a, 42b) in Form einer Schleife getrennt sind, die unter der festen Backe (3a, 3b) hervorragt.

13. Klickpedal nach dem vorhergehenden Anspruch, **dadurch gekennzeichnet, dass** der mittlere Abschnitt (42a, 42b) den festen Abschnitt (42) der Feder bildet, auf dem das Einstellelement (5, 5a, 5b) aufliegt.

14. Klickpedal nach einem der vorhergehenden Ansprüche, **dadurch gekennzeichnet, dass** die bewegliche Backe (2a, 2b) aus einem beweglichen Bügel (21) besteht.

15. Klickpedal nach dem vorhergehenden Anspruch, **dadurch gekennzeichnet, dass** die beweglichen Endabschnitte (41) der Feder gegen die seitlichen Abschnitte des beweglichen Bügels (21a, 21b) hervorragen.

16. Klickpedal nach einem der vorhergehenden Ansprüche, **dadurch gekennzeichnet, dass** die feste Backe (3a, 3b) eine herausragende Zunge (30a, 30b) umfasst, die von dem Einstellelement (5) durchsetzt ist.

17. Klickpedal nach einem der vorhergehenden Ansprüche, **dadurch gekennzeichnet, dass** die bewegliche Backe (2a, 2b) vorne an dem Pedal auf der Oberseite (1a) des Körpers (1) platziert ist, während die feste Backe (3a, 3b) hinten auf der gleichen Seite platziert ist.

18. Klickpedal nach einem der Ansprüche 1 bis 16, **dadurch gekennzeichnet, dass** die bewegliche Backe (2a, 2b) hinten an dem Pedal auf der Oberseite (1a) des Körpers (1) platziert ist, während die feste Backe (3a, 3b) vorne auf derselben Seite platziert ist.

## Claims

1. Automatic pedal for cycles, comprising a body (1) having an upper face (1a) and a lower face (1b) separated by a longitudinal plane (P) and each supporting a movable jaw (2a, 2b) and a fixed jaw (3a, 3b), the fixed jaws (3a, 3b) being mounted so as to face the movable jaws (2a, 2b) and the two fixed and movable jaws defining therebetween a recess (10a, 10b) for a cleat which is rigidly connected to the sole of a shoe, said movable jaw (2a, 2b) being biased by at least one resilient return spring (4a, 4b) so as to pivot between a position for locking said cleat and an open position for introducing and releasing said cleat, said spring having at least a movable leg (41) which is biased by the movable jaw (2a, 2b) and a fixed leg (42) which is not biased by the movable jaw and being provided with a member (5, 5a, 5b) for adjusting its stiffness, **characterized in that** said member (5) for adjusting the stiffness of the spring is mounted on the face of the pedal opposite said movable jaw (2a, 2b) in relation to the longitudinal plane (P), through the fixed jaw (3a, 3b), and acts on the fixed leg (42, 42a, 42b) of said spring.

2. Automatic pedal according to claim 1, **characterized in that** the movable jaw (2a, 2b) pivots about a transverse axis (X2, X1) which constitutes the mounting axis of the resilient return spring (4a, 4b) and the main axis (D) of the adjustment member (5, 5a, 5b) is oriented perpendicularly to said axis (X2, X1).

3. Automatic pedal according to the preceding claim, **characterized in that** the main axis (D) of the adjustment member (5, 5a, 5b) has an inclination (α) with respect to the perpendicular to the longitudinal plane (P) of the body (1).

4. Automatic pedal according to any of the preceding claims, **characterized in that** said adjustment member (5, 5a, 5b) is mounted through the body (1) of the pedal.

5. Automatic pedal according to any of the preceding claims, **characterized in that** said adjustment member (5, 5a, 5b) consists of a threaded rod (51) combined with a nut (6), the nut abutting the fixed leg (42) of the spring.

6. Automatic pedal according to the preceding claim, **characterized in that** the nut (6) is housed between the fixed jaw (3a, 3b) and the spring (4a, 4b).

7. Automatic pedal according to the preceding claim, **characterized in that** said adjustment member (5, 5a, 5b) comprises means for being mounted on the body (1) or on the fixed jaw (3a, 3b) such that the threaded rod (51) is rotatable and the nut (6) is translatable along said rod (51).

8. Automatic pedal according to the preceding claim, **characterized in that** said nut (6) comprises means for preventing rotation relative to the body (1) or to the fixed jaw (3a, 3b) of the pedal.

9. Automatic pedal according to any of claims 5 to 8, **characterized in that** said nut (6) comprises a central ring (61) extended by two lateral anti-rotation flanges (62) which abut said fixed jaw (3a, 3b).

10. Automatic pedal according to any of claims 5 to 9, **characterized in that** said threaded rod (51) has a head (52) which is flush with the upper face of the fixed jaw (3a, 3b) and mounted on a widened collar (53) arranged between the nut (6) and the lower face of said fixed jaw (3a, 3b).

11. Automatic pedal according to any of the preceding claims, **characterized in that** said spring (4a, 4b) is helical and comprises at least one movable end leg (41) which abuts the movable jaw (3a, 3b).

12. Automatic pedal according to the preceding claim, **characterized in that** the helical spring (4a, 4b) is formed of two portions of turns separated by a central leg (42a, 42b) in the form of a loop which protrudes under the fixed jaw (3a, 3b).

13. Automatic pedal according to the preceding claim, **characterized in that** the central leg (42a, 42b) constitutes the fixed leg (42) of the spring which the adjustment member (5, 5a, 5b) abuts.

14. Automatic pedal according to any of the preceding claims, **characterized in that** the movable jaw (2a, 2b) consists of a movable bracket (21).

15. Automatic pedal according to the preceding claim, **characterized in that** said movable end legs (41) of the spring protrude against the lateral legs of the movable bracket (21a, 21b).

16. Automatic pedal according to any of the preceding claims, **characterized in that** the fixed jaw (3a, 3b) comprises a protruding lug (30a, 30b) through which the adjustment member (5) passes.

17. Automatic pedal according to any of the preceding claims, **characterized in that** the movable jaw (2a, 2b) is placed at the front of the pedal on the upper face (1a) of the body (1), while the fixed jaw (3a, 3b) is placed at the rear on this same face.

18. Automatic pedal according to any of claims 1 to 16, **characterized in that** the movable jaw (2a, 2b) is placed at the rear of the pedal on the upper face (1a) of the body (1), while the fixed jaw (3a, 3b) is placed at the front on this same face.
